Europäisches Patentamt

European Patent Office

Office européen des brevets

(11) Numéro de publication: **0 252 436 B1**

# FASCICULE DE BREVET EUROPEEN

(45) Date de publication de fascicule du brevet:
**15.01.92**

(51) Int. Cl.5: **A61C 5/08**

(21) Numéro de dépôt: **87109513.9**

(22) Date de dépôt: **02.07.87**

(54) **Ensemble formé d'un tenon dentinaire et d'un organe d'entraînement de celui-ci.**

(30) Priorité: **07.07.86 CH 2735/86**

(43) Date de publication de la demande:
**13.01.88 Bulletin 88/02**

(45) Mention de la délivrance du brevet:
**15.01.92 Bulletin 92/03**

(84) Etats contractants désignés:
**DE FR SE**

(56) Documents cités:
**DE-A- 2 715 689**
**DE-A- 3 427 172**
**FR-A- 2 403 067**
**FR-A- 2 553 282**

(73) Titulaire: **LES FILS D'AUGUSTE MAILLEFER SOCIETE ANONYME A BALLAIGUES**

**CH-1338 Ballaigues(CH)**

(72) Inventeur: **Randin, Jean-Claude**
**Le Verger**
**CH-1338 Ballaigues(CH)**

(74) Mandataire: **Robert, Jean S.**
**51, route du Prieur**
**CH-1257 Landecy (Genève)(CH)**

## Description

La présente invention a pour objet un ensemble formé d'une part d'un tenon dentinaire pour l'art dentaire comprenant une tige dont une extrémité est filetée, qui présente une zone affaiblie de rupture et qui porte, à son extrémité opposée, un manche permettant de l'actionner manuellement, et d'autre part d'un organe d'entraînement assurant la liaison entre ledit tenon dentinaire et un dispositif moteur.

A la différence de ce que l'on désigne généralement par les noms de "pivots" ou de "tenons radiculaires" les "tenons dentinaires" ne sont pas fixés dans le canal radiculaire mais dans la dentine ou dans la périphérie du canal radiculaire. Ils peuvent être ainsi utilisés même dans des dents non dévitalisées.

Les tenons dentinaires pour l'art dentaire servent à la fixation et au renforcement d'obturations de cavités dans des dents naturelles ou à l'armature de reconstitutions de couronnes dentaires délabrées. (On entend par "obturation" non pas l'opération d'obturer mais le matériau d'obturation en place dans la cavité). Ils sont constitués par une tige filetée se vissant dans la racine, préparée à cet effet, présentant une zone affaiblie de rupture permettant au dentiste de casser cette tige à la longueur voulue, la partie dépassant la raciné servant à l'ancrage et au renforcement de l'obturation ou d'armature à la reconstitution d'un moignon de couronne.

Le vissage de ces tenons dans la dentine s'effectue soit à la main, auquel cas l'extrémité postérieure de la tige est munie d'un manche que le praticien saisit entre le pouce et l'index pour le faire tourner, soit mécaniquement, auquel cas l'extrémité postérieure de la tige présente des moyens donnant prise à un organe d'entraînement se fixant par ailleurs au contre-angle ou à la pièce à main du praticien.

Le but de la présente invention est d'accroître la flexibilité d'emploi du tenon dentinaire en permettant qu'il soit vissé aussi bien manuellement que mécaniquement, à l'aide d'un dispositif moteur, et ceci par des moyens extrêmement simples, ne modifiant pratiquement pas l'allure du tenon.

Il est à remarquer que l'on connaît (cf. FR-A-2 403 067) des tenons dentinaires pour l'art dentaire comprenant une tige munie d'un manche offrant prise à un organe d'entraînement. Cependant, dans de tels tenons dentinaires, la liaison entre le manche et l'organe d'entraînement du tenon n'est pas à frottement doux et n'est pas apte à assurer à la fois la liaison angulaire de ces deux éléments et également une liaison axiale, ce qui faciliterait grandement la mise en place du tenon dans la racine dentaire.

Le but de la présente invention est de remédier à cet inconvénient.

Ce but est atteint grâce aux moyens définis dans la revendication 1.

Le dessin représente, à titre d'exemple, une forme d'exécution de l'objet de l'invention.

La fig. 1 est une vue en élévation d'un tenon dentinaire pour l'art dentaire.

La fig. 2 est une vue en bout de son extrémité postérieure.

La fig. 3 est une vue en élévation d'un organe d'entraînement du tenon dentinaire des figs. 1 et 2.

La fig. 4 est une vue en bout de l'extrémité antérieure de cet organe d'entraînement, et

La fig. 5 est une vue en perspective d'une partie du tenon dentinaire des figs. 1 et 2 et d'une partie de l'organe d'entraînement des figs. 3 et 4.

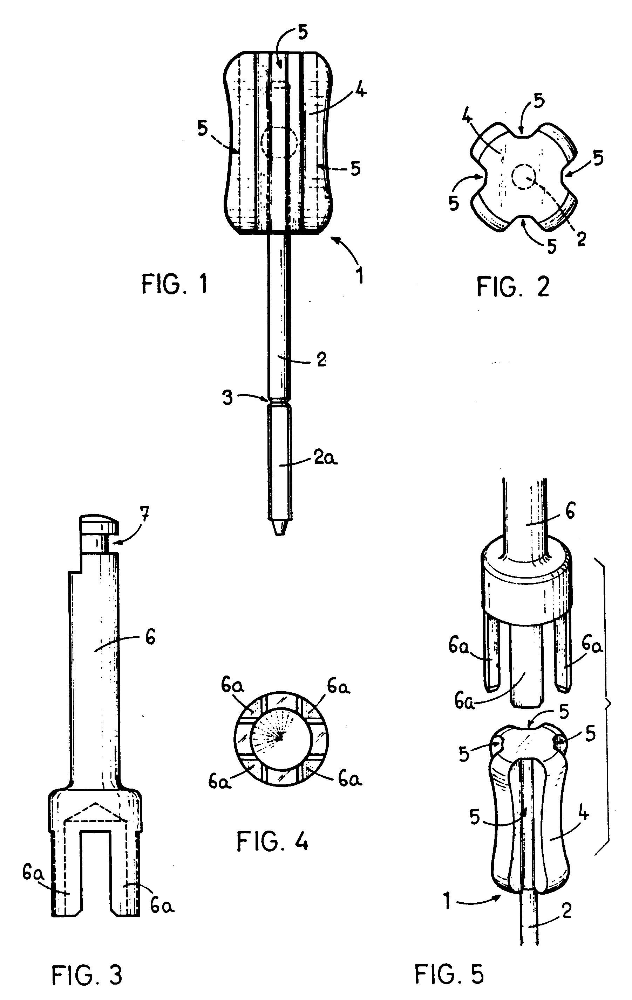

Le tenon dentinaire représenté aux figs. 1 et 2, désigné d'une façon générale par 1, comprend une tige 2 dont l'extrémité antérieure 2a est filetée et qui présente une gorge annulaire 3 constituant une zone affaiblie de rupture.

Cette tige 2 est munie, à son extrémité postérieure, d'un manche 4 formé d'un corps de révolution qui permet de visser manuellement le tenon dans une racine dentaire, en faisant tourner le manche 4 entre le pouce et l'index.

Le manche du tenon décrit et représenté présente quatre gorges longitudinales 5, disposées à 90° les unes des autres, destinées à recevoir chacune l'un de quatre doigts longitudinaux 6a que présente l'extrémité antérieure d'une tige 6 constituant un organe d'entraînement mécanique du tenon. L'extrémité postérieure de cette tige présente, en 7, une configuration permettant de l'engager dans la pièce d'angle d'une fraise dentaire en vue d'assurer l'entraînement mécanique du tenon.

Il est à remarquer que l'agencement est tel que les doigts 6a de l'organe d'entraînement s'engagent à frottement doux sur le manche 4 du tenon dentinaire 1 de façon que ce dernier soit non seulement rendu solidaire angulairement de la pièce d'entraînement mais également axialement, ce qui facilite sa présentation, avant son vissage, en regard du trou foré dans la racine pour le recevoir.

Le nombre des gorges longitudinales 5 du manches 4 du tenon et des doigts longitudinaux 6a de la tige 6 de l'organe d'entraînement pourra être différent de quatre, soit deux ou trois par exemple, ces gorges et ces doigts étant répartis angulairement de façon égale.

On pourra même imaginer le cas où le manche 4 du tenon ne présenterait qu'une seule gorge longitudinale dans laquelle s'engagerait une nervure longitudinale intérieure que présenterait la partie terminale, tubulaire, de l'organe d'entraînement, s'engageant sur le manche du tenon.

Grâce à la présente disposition, le tenon dentinaire 1 peut être vissé soit manuellement, à l'aide du manche 4, soit mécaniquement à l'aide de la pièce d'entraînement 6 elle-même entraînée par un dispositif moteur.

**Revendications**

1. Ensemble formé d'une part d'un tenon dentinaire (1) pour l'art dentaire comprenant une tige (2) dont une extrémité (2a) est filetée, qui présente une zone affaiblie de rupture (3) et qui porte, à son extrémité opposée, un manche (4) permettant de l'actionner manuellement, et d'autre part d'un organe d'entraînement (6) assurant la liaison entre ledit tenon dentinaire (1) et un dispositif moteur, caractérisé par le fait que le manche (4) du tenon (1), constitué par un corps de révolution, présente au moins une gorge longitudinale (5) destinée à recevoir une saillie longitudinale (6a) que présente l'extrémité de l'organe d'entraînement (6) qui s'engage sur ledit manche (4), de façon que, une fois l'interengagement effectué, l'organe d'entraînement (6) soit solidaire angulairement du manche (4) du tenon, et par le fait que la liaison entre le manche (4) du tenon (1) et l'extrémité de l'organe d'entraînement (6) qui coopère avec lui est à frottement doux, cette liaison solidarisant axialement, outre que angulairement, ces deux éléments (4 et 6).

2. Ensemble suivant la revendication 1, caractérisé par le fait que le manche (4) du tenon (1) présente plusieurs gorges longitudinales (5) réparties angulairement de façon égale, l'extrémité de l'organe d'entraînement (6) coopérant avec ledit manche (4) présentant un nombre correspondant de doigts longitudinaux (6a), également répartis de façon égale, s'engageant chacun dans une des gorges longitudinales (5) du manche (4) du tenon (1).

**Claims**

1. Unit constituted on the one hand with a parapulper restorative pin (1) for use in dentistry comprising a stem (2) one end (2a) of which is threaded, which shows a weakened breaking zone (3) and which carries, at its opposed end, a handle (4) permitting to operate it manually, and on the other hand with a driving member (6) ensuring the connection between the said restorative pin (1) and a motor driving device, characterized by the fact that the handle (4) of the pin (1), constituted by a revolution body, is provided with at least one longitudinal groove (5) intended to receive a longitudinal protrusion (6a) of the end of the driving member (6) which engages the said handle (4), so that once the interengagement is effected, the driving member (6) is angularly rigid with the handle (4) of the pin and by the fact that the connection between the handle (4) of the pin (1) and the end of the driving member (6) which cooperates therewith is a smooth friction fit, this connection connecting axially, besides angularly, these two elements (4 and 6).

2. Unit according to claim 1, characterized by the fact that the handle (4) of the pin (1) is provided with several longitudinal grooves (5) distributed angularly regularly, the end of the driving member (6) cooperating with the said handle (4) being provided with a corresponding number of longitudinal fingers (6a), also distributed angularly, engaging each one of the longitudinal grooves (5) of the handle (4) of the pin (1).

**Patentansprüche**

1. Einheit, gebildet

   a) einerseits von einem Zahnstift (1) für zahnärztliche Zwecke mit einem Schaft (2), welcher an einem Ende (2a) ein Gewinde aufweist, welcher (2) eine Schwach- bzw. Bruchstelle (3) aufweist und welcher (2) an seinem anderen Ende einen Griff (4), zur Bedienung mit der Hand, aufweist, sowie
   b) andererseits von seinem Antriebsorgan (6), welches die Verbindung zwischen genanntem Zahnstift (1) und einer Antriebseinrichtung sicherstellt,

   dadurch gekennzeichnet,

   - daß der Griff (4) des Zahnstiftes (1) aus einem Drehkörper gebildet ist und mindestens einen Längsschlitz (5) aufweist, welcher dazu bestimmt ist, einen länglichen Vorsprung (6a) aufzunehmen, der am Ende des Antriebsorganes (6) vorgesehen ist, welches (6) derart den Griff (4) übergreift, daß, sobald der Eingreifvorgang durchgeführt ist, das Antriebsorgan (6) in Umfangsrichtung kraftschlüssig mit dem Griff (4) des Zahnstiftes verbunden ist, sowie
   - daß die Verbindung zwischen dem Griff (4) des Zahnstiftes (1) und dem Ende des mit ihm zusammenarbeitenden Antriebsorganes (6) in einer leichten Reibung besteht und eine kraftschlüssige Verbindung der beiden Elemente (4 und 6) in Axialrichtung, zusätzlich zur Verbindung in Umfangsrichtung, sicherstellt.

2. Einheit nach Anspruch 1, dadurch gekennzeichnet, daß der Griff (4) des Zahnstiftes (1) mehrere Längsschlitze (5) aufweist, welche in Umfangsrichtung gleichmäßig verteilt sind, wobei das Ende des Antriebsorganes (6), welches mit dem Griff (4) zusammenarbeitet, eine entsprechende Anzahl von länglichen Fingern (6a) aufweist, welche ebenfalls gleichmäßig angeordnet sind und jeweils in einen der Längsschlitze (5) des Griffes (4) des Zahnstiftes (1) eingreifen.

FIG. 1

FIG. 2

FIG. 3

FIG. 4

FIG. 5